# EUROPEAN PATENT SPECIFICATION

(11) **EP 0 355 421 B1**
(45) Date of publication and mention of the grant of the patent: **27.04.1994**
(21) Application number: 89113464.5
(22) Date of filing: 21.07.1989
(51) Int. Cl.: F02P 5/15

(54) **Electronic ignition system for internal combustion engines**
Elektronische Zündanlage für Brennkraftmaschinen
Système électronique d'allumage pour moteurs à combustion interne

(30) Priority: 22.07.1988 IT 6769488
(43) Date of publication of application: 28.02.1990
(73) Proprietor: FIAT AUTO S.p.A., 10135 Torino (IT)
(72) Inventor: Dassetto, Alessandro, I-10100 Torino (IT)
(74) Representative: Bongiovanni, Guido

(56) References cited:
- EP-A- 0 203 575
- US-A- 4 225 925
- US-A- 4 570 594
- US-A- 4 627 399
- PATENT ABSTRACTS OF JAPAN, vol. 10, no. 40 (M454)[2097], 18th Febuary 1986, page 119 M 454; & JP-A-60 192 878
- PATENT ABSTRACTS OF JAPAN, vol. 10, no. 151 (M-483)[2208], 31st May 1986, page 89 M 483; & JP -A-61 4864

## Description

This invention relates to an electronic ignition system for internal combustion engines, in particular two-cylinder engines. The known conventional ignition system, still universally applied to two-cylinder engines, comprises a points box with its point-type circuit breaker, a timer unit with centrifugal weights for adjusting the ignition advance, and a pneumatic valve for supplementary adjustment.

The main drawback of these systems is the presence of mechanical moving members which because of the gradual increase in play and the weakening of the springs tend after a time to lose precision in supplying the required advance. The circuit breaker itself requires periodical replacement and retiming with respect to the top dead centre. A specific drive must also be provided for the timer unit, which results in increased space usage in the engine compartment. Moreover, in these conventional systems no type of automatic diagnosis of operational faults is possible, resulting in relatively lengthy repair times. The application of "antiemission" devices, ie for controlling the exhaust gas composition, is complicated and therefore costly.

Electronic ignition systems have therefore been devised comprising a central unit with microprocessor which receives various informational signals from various sensors for the engine operating parameters and provides the ignition control on the basis of memorized curves. For instance European patent application EP-A-203.575 discloses an electronic ignition system in which the ignition time is read in a map, which is stored in a ROM, from a location designated by engine rotational speed and absolute pressure measured in the intake pipe. However these systems incorporate relatively sophisticated processing procedures, use a lot of memory and cannot therefore be economically applied to engine of low-power automobiles, and in particular to two-cylinder engines, for which as stated the ignition is still provided by conventional point box system.

An object of the present invention is to provide an electronic ignition system which obviates the aforesaid drawbacks of the conventional ignition system but at the same time is of relatively economical construction compared with more complicated systems, while ensuring high reliability and good performance, to thus enable it to be used advantageously on two-cylinder engines in particular.

Further objects and advantages of the system will be apparent from the following description.

The present invention provides an electronic ignition system for internal combustion engines comprising an electronic control center including a central processor unit connected with first sensor means which measures the engine rotational speed and the timing of at least one top dead center (TDC) of said engine, and connected with second sensor means for measuring the pressure in the intake manifold of said engine;
said central processor unit having calculating means for calculating on the basis of the signals produced by said first and said second sensor means the moment (B) at which to effect ignition with respect to said top dead center (TDC), and causing the consequent activation of ignition means,
characterized in that
said second sensor means produces a signal having a first or a second level when the measured value of said pressure is respectively greater or lower than a threshold value (P1), and in that said control center comprises:
memory means in which there are memorized points of a first and a second curve which relates the rotational speed (N) of said engine to the angle (alpha) by which said moment (B) at which to effect ignition is displaced from said top dead center (TDC);
selecting means for choosing in said memory means said first or said second curve if respectively the signal produced by said second sensor means is at said first or at said second level;
interpolating means for calculating the current value of said angle (alpha) using said memorized points of the chosen curve on the basis of the engine speed signal produced by said first sensor means. The present invention will be more apparent from the description of one embodiment thereof given hereinafter by way of non-limiting example with reference to the accompanying drawings in which:
Figure 1 is a diagrammatic representation of an electronic ignition system formed in accordance with the present invention and applied to a two-cylinder internal combustion engine;
Figure 2 represents two curves memorised in the electronic control centre of the system of Figure 1;
Figure 3 is an operational block diagram of the central processor unit of the system of Figure 1; and
Figure 4 is a diagram illustrating the operation of the system of the present invention.

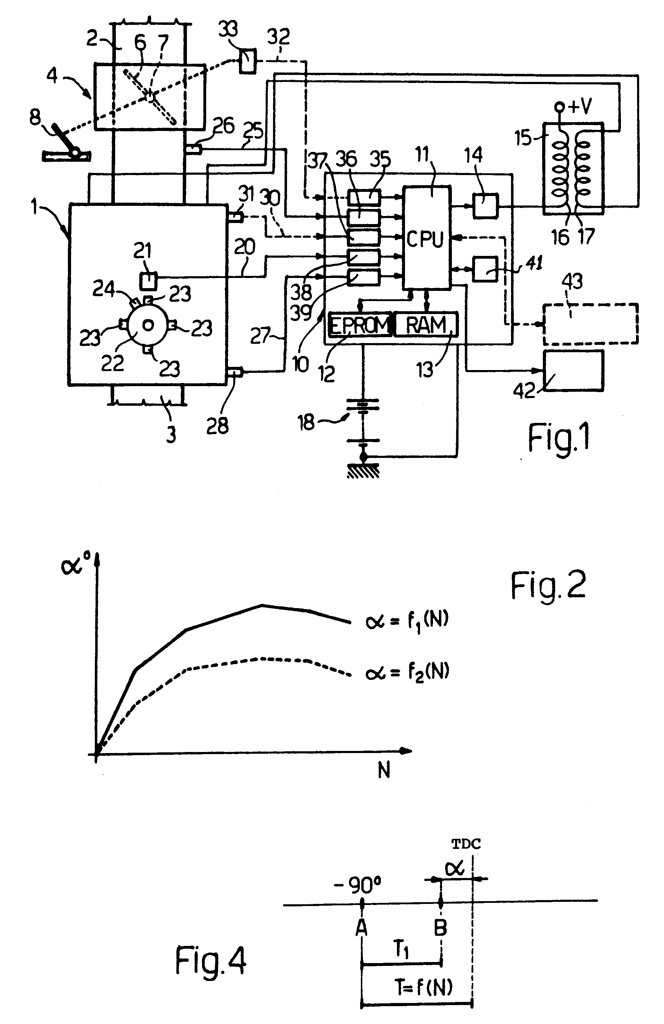

In Figure 1 the reference numeral 1 indicates diagrammatically a two-cylinder internal combustion engine provided with an intake duct 2 and an exhaust duct 3. In the intake duct 2 there is inserted a fuel feed unit 4 provided with a main throttle valve 6 comprising a rotation spindle 7, the angular position of which is controlled mechanically by an accelerator pedal 8.

The reference numeral 10 indicates an electronic control centre for the ignition system of the invention, comprising a central processor unit 11 (CPU) of very simple microprocessor type, such as four bit type, to which EPROM 12 and RAM 13 memory blocks are connected, said central unit 11, by way of control block 14 comprising conveniently a known Darlington circuit, controlling an ignition transformer 15 comprising a primary winding 16 connected in series with the control block 14 towards a positive feed terminal +V controlled by the ignition key switch, and a high voltage secondary winding, the two ends of which are directly connected to a respective spark plug of the two-cylinder engine 1.

Said control centre 10, which is powered by the vehicle battery 18, receives:
a first signal 20 provided by a sensor 21 which measures the rotational speed and timing of the engine 1; specifically, said sensor 21, of known type, is faced by a disc 22 which rotates in accordance with the rotation of the shaft of the engine 1 and is provided on its periphery with equidistant teeth 23 and an additional tooth 24, the passage of the teeth 23 resulting in a signal 20 in the form of a plurality of pulses which enable the rotational speed of the engine 1 to be determined, whereas the passage of the additional tooth 24 enables the timing (ie the position of a top dead centre) of the engine 1 to be determined;
a second signal 25 provided by a sensor 26 for measuring the pressure in the intake manifold 2 downstream of the throttle valve 6; specifically, the sensor 26 comprises a switch, for example controlled by a diaphragm, the open or closed position of which is determined by the measured vacuum relative to a set threshold value (for example fixed at 13,3 kPa (100 mmHg)), so as to provide the signal 25 in digital form at two levels;
a third signal 27 provided by a sensor 28 which measures the lubricating oil temperature in the engine 1; specifically, the sensor 28 can provide a digital signal 27 at two levels, depending on whether the measured temperature signal exceeds a set threshold value or not;
and can also receive:
a fourth signal 30 provided by a sensor for measuring the cooling liquid temperature in the engine 1; specifically, the sensor 31 can provide a digital signal at two levels, depending on whether the measured temperature signal exceeds a set threshold value or not;
and a fifth signal 32, also a two-level digital signal, indicating whether the throttle valve 6 is completely closed or not, and originating from a sensor 33, conveniently of switch type, connected in known manner to the spindle 7.

Said signals 20, 25, 27, 30 and 32 reach the central unit 11 through respective blocks 35, 36, 37, 38 and 39 which treat them in a manner which makes them suitable for feeding to the unit 11, such as level adaptation, signal squaring, and signal digitalization, by conversion with respect to a threshold value, if the signal provided for example by the sensors 28 or 31, or possibly also 26, is of analog type.

The following are also connected to the central unit 11:
a block 41 arranged to the monitor correct operation of the microprocessor, for example in known manner by receiving periodic zeroing signals, and in the case of a fault initially resetting the microprocessor operating conditions and providing emergency operation of the ignition system;
an optical and/or acoustic warning alarm block 42;
and in addition an external unit 43 for fault condition diagnosis as described hereinafter can be connected.

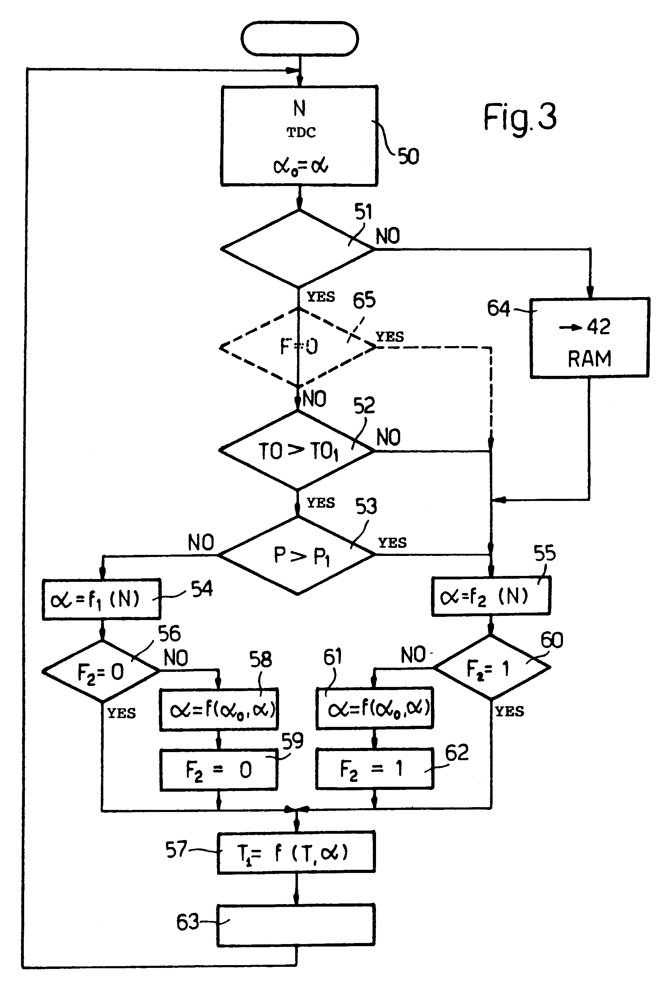

The operation of the electronic ignition system of the present invention is described hereinafter with reference to the diagram of Figure 3, which shows the periodically repeated program of the central unit 11, by which the various input signals are obtained and the output control signals are fed.

An initial block 50 allows signals in digital value to be obtained from the various said sensors, and in known manner on the basis of the received signals 20 calculates the parameter N representing the rotational speed of the engine 1 and identifies a top dead centre; said block 50 also memorises the advance angle used in the preceding cycle, ie by putting αₒ (memorised advance angle) equal to α (advance angle used). The block 50 leads to a block 51 which determines whether any irregular operating conditions exist in the system, i.e. whether the information signals obtained from the various sensors are admissible on the basis of the various possible operating conditions, whether the signals for the actuators (block 15) are correctly fed, and whether the microprocessor operation, determined by the block 41, is regular. If positive, there being thus no irregular conditions, the program passes to a block 52 which determines the level of the signal 27 from the sensor 28, i.e. whether the oil temperature (TO) exceeds a set threshold value (TO1), and is positive (ie normal running conditions) passes to a block 53 which determines the level of the signal 25 from the pressure sensor 26, ie whether the pressure (P) in the intake manifold 2 exceeds a set threshold value (P1). If the determination of block 53 is negative (throttle valve 6 open only a small extent), the program passes to a block 54 which calculates the value of the advance angle a on the basis of the rotational speed N from a first curve memorised in terms of points in the memory block and corresponding to the full-line curve shown in Figure 2. Specifically, the calculation is done by interpolating between the memorised points. If the block 53 determination is positive (throttle valve open towards full power position), the program passes to a block 55 which likewise calculates the value of the advance angle but from another curve memorised in terms of points in the memory block 12 and corresponding to the dashed-line curve of Figure 2. The block 55 is reached directly if the condition determined by the block 52 is negative. From the block 54 the program passes to a block 56 which determines whether the parameter F2 is equal to zero. If positive, this means that in the preceding cycle the advance angle had already been calculated by the block 54 using the full-line curve, and the program then passes directly to a block 57 which calculates the time T1 representing the moment B for effecting ignition; specifically, as can be seen in Figure 4 in which a indicates the ignition advance angle to be used relative to the top dead centre (TDC), A indicates a point at 90° advance relative to the TDC, and T indicates the time between the points A and TDC, which depends on the engine rotational speed N, the time T1 is calculated as a proportional interval between the points A and B. From the block 57 the program therefore passes to an ignition control block 63 which at time A feeds the primary winding 16 of the block 15 and at time B interrupts this feed, causing the winding 17 to feed the discharge voltage to the two spark plugs, of which only one is the effective one. The program then returns from the block 63 to the block 50 to initiate a new calculation cycle. If the condition determined by the block 56 is negative, meaning that in the preceding cycle the advance angle alpha had been calculated by the block 55, using the dashed-line curve, the program passes to a block 58 which calculates the advance angle a by interpolation between the current value calculated by the block 54 and the previously used value memorised in the block 50, to then pass to a block 59 which puts F2 equal to 0, to arrive at the block 57 for calculating the time T1. Analogously, from the block 55 the program passes to a block 60 which determines whether the parameter F2 is equal to one; if positive, this means that in the preceding cycle the advance angle alpha had already been calculated by the block 55, so that the program passes directly to the calculation block 57, whereas if the condition determined by the block 60 is negative, signifying that in the preceding cycle the advance angle alpha was calculated by the block 54, the program passes to a block 61 which calculates the advance angle alpha by interpolation between the current value calculated by the block 55 and the previously used value memorised by the block 50, to then pass to a block 62 which puts the parameter F2 equal to 1, to arrive at the block 57 for calculating the time T1.

If however the block 51 senses an irregular condition, the program passes to a block 64 which puts emergency operation into practice by causing the advance adjustment time T1 to be obtained on the basis of an advance angle alpha taken from the dashed-line curve of Figure 2, memorises codes in the RAM 13 memory for identifying the type of irregularity which has occurred, and activates the block 42 which indicates this emergency condition to the driver. The program then passes from the block 64 to the block 55 which executes the calculation for controlling the ignition as already described.

As shown in Figure 1, the external unit 43 can be connected to the control centre in order, during the diagnosis stage, to identity the type of irregularity which has occurred by noting the codes memorised in the block 13, even when the ignition key is not turned on, and can also test for correct operation of the control centre 10 itself.

If the sensor 33 is also connected to the control centre 10, a positive condition determined by the block 51 causes the program to pass to a block 65 (indicated by dashed lines) which determines whether a parameter F is equal to 0, ie whether the signal 32 indicates that the throttle valve 6 is in its completely closed position. If positive, the program passes directly to the block 55, whereas if negative it proceeds to the next block 52. Again, if the sensor 31 is conducted this can be used as an alternative to or complementary to the sensor 28, and its function can be performed either as an alternative to or successively to the block 52.

The advantages of the electronic ignition system of the present invention are apparent from the description, and in fact with a relatively simplified construction of the control centre 10, in particular based on the use of only a two-level signal from the intake pressure sensor, which determines the use of one of the two advance angle curves (Figure 2) mapped in the microprocessor memory, a low-cost system of satisfactory functionality is obtained, with complete elimination of mechanical moving members and consequent increased reliability, without any further need to periodically replace components, and further leading to a reduction in the overall dimensions of the engine compartment and the elimination of the distributor drive shaft, and with no further need for timing adjustments and testing at the end of the assembly line, simplification of the procedure for obtaining optimisation of the advance angle for anti-pollution purposes, and a diagnosis facility in the case of malfunction.

Finally, it is apparent that modifications can be made to the described and illustrated embodiment of the present invention, but without leaving the scope of the invention as defined in the appended claims.

## Claims

1. An electronic ignition system for internal combustion engines (1) comprising an electronic control center (10) including a central processor unit (11) connected with first sensor means (21) which measures the engine rotational speed and the timing of at least one top dead center (TDC) of said engine (1), and connected with second sensor means (26) for measuring the pressure in the intake manifold (2) of said engine (1);
said central processor unit (11) having calculating means for calculating on the basis of the signals produced by said first (21) and said second (26) sensor means the moment (B) at which to effect ignition with respect to said top dead center (TDC), and causing the consequent activation of ignition means (15),
characterized in that
said second sensor means (26) produces a signal having a first or a second level when the measured value of said pressure is respectively greater or lower than a threshold value (P1), and in that
said control center (10) comprises:
memory means (12) in which there are memorized points of a first and a second curve which relates the rotational speed (N) of said engine (1) to the angle (alpha) by which said moment (B) at which to effect ignition is displaced from said top dead center (TDC);
selecting means for choosing in said memory means (12) said first or said second curve if respectively the signal produced by said second sensor means (26) is at said first or at said second level;
interpolating means for calculating the current value of said angle (alpha) using said memorized points of the chosen curve on the basis of the engine speed signal produced by said first sensor means (21).

2. A system as claimed in claim 1, characterized in that said central processor unit (11) comprises first electronic means for determining which of said curves was selected during the preceding calculation cycle; and
second electronic means for calculating, in the case of a changed selection, a new angle (alpha) by which said moment (B) at which to effect ignition is displaced, on the basis of the current calculated value (alpha) and the value (alphaₒ) used in the preceding cycle.

3. A system as claimed in claim 1 or 2, characterized in that said central processor unit (11) comprises third electronic means for calculating said moment (B) at which to effect ignition based on the value obtained from said displacement angle (alpha);
said effecting moment (B) being determined as a time interval (T1) from a predetermined initial moment (A).

4. A system as claimed in any of the preceding claims, characterized in that said selecting means are connected with additional sensors (28,31,33) for causing the selection of one of said first or second curve on the base of the signals produced by said additional sensors (28,31,33).

5. A system as claimed in claim 4, characterized in that said additional sensors (28,31,33) measure the oil-temperature and/or the temperature of the cooling liquid of said engine and whether a valve (6) for feeding air to said engine is in the minimum opening.

6. A system as claimed in one of the preceding claims, characterized in that said central processor unit (11) comprises checking means for sensing and monitoring the irregularities in the signal produced by said first (21) and said second sensors means (26), or in the operating signals of said central unit (11);
said checking means triggering as a consequence a predetermined emergency activation of said ignition means (15) and memorizing the irregularities of said signals.

7. A system as claimed in claim 6, characterized in that an external unit (43) for identifying said parameters indicative of said irregularities can be connected to said checking means.

8. A system as claimed in one of the preceding claims characterized in that said ignition means (15) comprise a coil with its secondary winding (17) connected simultaneously to the spark plugs of both cylinders of a two-cylinder engine.

9. A system as claimed in one of the preceding claims, characterized in that said second sensor means (26) comprise switch means which are either open or closed depending on the relationship between the pressure and said threshold value (P1).

10. A system as claimed in one of the preceding claims, characterized in that said first sensor means (21) comprise a single sensor facing a single rotating element (22) connected to the shaft of said engine and having information elements (23,24) spaced in accordance with a predetermined configuration.

## Patentansprüche

1. Elektronische Zündanlage für Verbrennungsmotoren (1), umfassend ein elektronisches Steuerzentrum (10) mit einer zentralen Prozessoreinheit (11), die mit einem ersten Sensormittel, welches die Motorendrehzahl und die Zeiteinstellung wenigstens eines oberen Totpunktes (TDC) des Motors (1) mißt, und mit einem zweiten Sensormittel (26) zum Messen des Druckes in dem Ansaugrohr (2) des Motors (1) verbunden ist, wobei die zentrale Prozessoreinheit (11) Rechenmittel zum Errechnen des Zeitpunktes (B), zu dem die Zündung in bezug auf den besagten oberen Totpunkt (TDC) erfolgt, auf der Grundlage der von dem ersten (21) und dem zweiten (26) Sensormittel erzeugten Signale und zur sich daraus ergebenden Aktivierung des Zündungsmittels (15) aufweist,
dadurch gekennzeichnet,
daß das besagte zweite Sensormittel (26) ein Signal erzeugt mit einem ersten oder einem zweiten Pegel, wenn der gemessene Wert des Druckes entsprechend überhalb oder unterhalb eines Schwellenwertes (P1) liegt, und
daß das besagte Steuerzentrum (10)
- ein Speichermittel (12), in dem abgespeicherte Punkte einer ersten und einer zweiten Kurve abgelegt sind, das die Drehzahl (N) des Motors (1) in Beziehung setzt zu dem Winkel (alpha), um den der besagte Zeitpunkt zum Bewirken der Zündung verschoben wird aus dem besagten oberen Totpunkt (TDC),
- Auswahlmittel zum Wählen der ersten oder zweiten Kurve in dem Speichermittel (12), wenn das vom zweiten Sensormittel (26) erzeugte Signal entsprechend den ersten oder zweiten Pegel hat,
- Interpolationsmittel zur Berechnung des momentanen Wertes des besagten Winkels (alpha) unter Verwendung der genannten abgespeicherten Punkte der ausgewählten Kurve auf der Grundlage des vom ersten Sensormittel (21) erzeugten Drehzahlsignales
umfaßt.

2. Zündanlage nach Anspruch 1, dadurch gekennzeichnet, daß die besagte zentrale Prozessoreinheit (11)
- erste elektronische Mittel zur Bestimmung, welche der besagten Kurven während des vorangegangenen Berechnungszyklus ausgewählt worden war, und
- zweite elektronische Mittel zur Berechnung im Falle einer geänderten Auswahl eines neuen Winkels (alpha), um welchen der Zeitpunkt (B) zum Bewirken der Zündung verschoben wird, auf der Grundlage des momentan errechneten Wertes (alpha) und des Wertes (alpha₀), der im vorangegangenen Zyklus verwendet worden ist,
umfaßt.

3. Zündanlage nach Anspruch 1 oder 2, dadurch gekennzeichnet, daß die besagte zentrale Prozessoreinheit (11) dritte elektronische Mittel zur Berechnung des besagten Zeitpunktes (B), zu dem die Zündung bewirkt werden soll, auf der Grundlage des Wertes, der aus dem besagten Verschiebungswinkel erhalten wird, umfaßt, wobei der Zündzeitpunkt (B) als Zeitintervall (T1) aus einem vorbestimmten Anfangszeitpunkt (A) bestimmt wird.

4. Zündanlage nach einem der vorhergehenden Ansprüche, dadurch gekennzeichnet, daß die Auswahlmittel mit zusätzlichen Sensoren (28, 31, 33) verbunden sind zum Veranlassen der Auswahl einer der genannten ersten oder zweiten Kurve auf der Grundlage der von den zusätzlichen Sensoren (28, 31, 33) erzeugten Signale.

5. Zündanlage nach Anspruch 4, dadurch gekennzeichnet, daß die zusätzlichen Sensoren (28, 31, 33) die Öltemperatur und/oder die Temperatur der Kühlflüssigkeit des Motors messen und ob sich ein Ventil (6) zur Luftzufuhr zum Motor in seiner Stellung mit minimaler Öffnung befindet.

6. Zündanlage nach einem der vorhergehenden Ansprüche, dadurch gekennzeichnet, daß die zentrale Prozessoreinheit (11) Prüfmittel zum Erfassen und Überwachen der Unregelmäßigkeiten in den vom ersten und zweiten Sensormittel (26) oder in den Betriebssignalen der genannten zentralen Prozessoreinheit (11) erzeugten Signalen umfaßt, wobei die Prüfmittel infolgedessen eine vorbestimmte Notzündung triggern und die Unregelmäßigkeiten der Signale abspeichert.

7. Zündanlage nach Anspruch 6, dadurch gekennzeichnet, daß eine externe Einheit (43) zum Erkennen der für die genannten Unregelmäßigkeiten indikativen Parameter mit den genannten Prüfmitteln verbunden werden kann.

8. Zündanlage nach einem der vorhergehenden Ansprüche, dadurch gekennzeichnet, daß die Zündmittel (15) eine Spule umfassen, deren Sekundärwicklung (17) gleichzeitig mit den Zündkerzen beider Zylinder eines Zweizylindermotors verbunden ist.

9. Zündanlage nach einem der vorhergehenden Ansprüche, dadurch gekennzeichnet, daß die zweiten Sensormittel (26) Schaltmittel umfassen, die entweder geöffnet oder geschlossen sind, abhängig von der Beziehung zwischen dem Druck und dem genannten Schwellwert (P1).

10. Zündanlage nach einem der vorhergehenden Ansprüche, dadurch gekennzeichnet, daß die ersten Sensormittel (21) einen einzigen Sensor umfassen, der einem einzigen sich drehenden Element (22) gegenüberliegt, welches an der Motorwelle angebracht ist und Informationselemente (23, 24) aufweist, die entsprechend einer vorbestimmten Konfiguration voneinander beabstandet angeordnet sind.

## Revendications

1. Système électronique d'allumage pour moteurs à combustion interne (1), comprenant un centre de commande électronique (10) incluant une unité centrale de traitement (11) connectée à des premiers moyens de détection (21) qui mesurent la vitesse de rotation du moteur et l'instant de passage à au moins un point mort haut (PMH) dudit moteur (1), et connectée à des deuxièmes moyens de détection (26) qui mesurent la pression dans la tubulure d'admission (2) dudit moteur (1) ;
ladite unité centrale de traitement (11) comportant des moyens de calcul pour calculer, sur la base des signaux produits par lesdits premiers (21) et les dits deuxièmes (26) moyens de détection, l'instant (B) auquel l'allumage doit être effectué par rapport audit point mort haut (PMH)et pour commander l'activation correspondante de moyens d'allumage (15),
caractérisé en ce que :
lesdits deuxièmes moyens de détection (26) produisent un signal ayant un premier ou un deuxième niveau lorsque la valeur mesurée de ladite pression est respectivement plus grande ou plus petite qu'une valeur de seuil (P1) ;
et en ce que ledit centre de commande (10) comprend :
des moyens de mémoire (12) dans lesquels sont mémorisés des points d'une première et d'une deuxième courbes qui représentent la vitesse de rotation (N) du dit moteur (1) en fonction de l'angle (α) dont ledit instant (B), auquel l'allumage doit être effectué, est décalé par rapport audit point mort haut (PMH) ;
des moyens de sélection pour choisir, dans lesdits moyens de mémoire (12), ladite première ou la dite deuxième courbe si, respectivement, le signal produit par lesdits deuxièmes moyens de détection (26) est audit premier ou audit deuxième niveau ; et
des moyens d'interpolation pour calculer la valeur courante dudit angle (α) en utilisant lesdits points mémorisés de la courbe choisie sur la base du signal de vitesse de moteur produit par lesdits premiers moyens de détection (21).

2. Système suivant la revendication 1, caractérisé en ce que ladite unité centrale de traitement (11) comprend des premiers moyens électroniques pour déterminer celle desdites courbes qui a été choisie pendant le cycle de calcul précédent ; et
des deuxièmes moyens électroniques pour calculer, dans le cas d'une sélection modifiée, un nouvel angle (α) par lequel ledit instant (B) auquel l'allumage doit être effectué, sur la base de la valeur calculée courante (α) et de la valeur (α₀) utilisée dans le cycle précédent.

3. Système suivant la revendication 1 ou 2, caractérisé en ce que ladite unité centrale de traitement (11) comprend des troisièmes moyens électroniques pour calculer ledit instant (B) auquel l'allumage doit être effectué, sur la base de la valeur obtenue à partir dudit angle de décalage (α) ;
ledit instant d'allumage (B) étant déterminé sous la forme d'un intervalle de temps (T1) à partir d'un instant initial prédéterminé (A).

4. Système suivant une quelconque des revendications précédentes, caractérisé en ce que lesdits moyens de sélection sont connectés à des capteurs additionnels (28,31,33) pour effectuer la sélection d'une des dites première et deuxième courbes sur la base des signaux produits par lesdits capteurs additionnels (28,31,33).

5. Système suivant la revendication 4, caractérisé en ce que lesdits capteurs additionnels (28, 31,33) mesurent la température d'huile et/ou la température du liquide de refroidissement dudit moteur et déterminent si un papillon (6) d'admission d'air audit moteur est à l'ouverture minimale.

6. Système suivant une quelconque des revendications précédentes, caractérisé en ce que ladite unité centrale de traitement (11) comprend des moyens de vérification pour détecter et contrôler les irrégularités du signal produit par lesdits premiers (21) et lesdits deuxièmes (26) moyens de détection, ou dans les signaux de commande de ladite unité centrale (11) ;
lesdits moyens de vérification déclenchant, comme conséquence une activation de secours prédéterminée desdits moyens d'allumage (15) et mémorisant les irrégularités desdits signaux.

7. Système suivant la revendication 6, caractérisé en ce qu'une unité extérieure (43) pour identifier lesdits paramètres indicatifs desdites irrégularités peut être connectée auxdits moyens de vérification.

8. Système suivant une quelconque des revendications précédentes, caractérisé en ce que lesdits moyens d'allumage (15) comprennent une bobine dont l'enroulement secondaire (17) est connectée simultanément aux bougies des deux cylindres d'un moteur à deux cylindres.

9. Système suivant une quelconque des revendications précédentes, caractérisé en ce que lesdits deuxièmes moyens de détection (26) comprennent des moyens d'interruption qui sont ouverts ou fermés en fonction de la relation entre la pression et ladite valeur de seuil (P1).

10. Système suivant une quelconque des revendications précédentes, caractérisé en ce que lesdits premiers moyens de détection (21) comprennent un capteur unique placé en regard d'un élément rotatif unique (22) accouplé à l'arbre dudit moteur et comportant des éléments d'information (23,24) espacés suivant une configuration prédéterminée.
